(19) Europäisches Patentamt / European Patent Office / Office européen des brevets

(11) **EP 3 078 683 A1**

(12) **EUROPEAN PATENT APPLICATION**
published in accordance with Art. 153(4) EPC


(43) Date of publication:
**12.10.2016 Bulletin 2016/41**

(21) Application number: **14867016.9**

(22) Date of filing: **01.12.2014**

(51) Int Cl.:
***C08F 220/34*** *(2006.01)* ***C08F 2/44*** *(2006.01)*
***C08F 220/60*** *(2006.01)* ***C08F 265/00*** *(2006.01)*
***C09D 5/14*** *(2006.01)* ***C09D 133/14*** *(2006.01)*
***C09D 133/26*** *(2006.01)* ***C09J 133/14*** *(2006.01)*
***C09J 133/26*** *(2006.01)*

(86) International application number:
**PCT/JP2014/005985**

(87) International publication number:
**WO 2015/083360 (11.06.2015 Gazette 2015/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.12.2013 JP 2013250326**



(71) Applicant: **Nippon Soda Co., Ltd.**
**Tokyo 100-8165 (JP)**

(72) Inventors:
- **NIITANI, Takeshi**
  **Ichihara-shi**
  **Chiba 290-0045 (JP)**
- **TATEISHI, Yuichi**
  **Ichihara-shi**
  **Chiba 290-0045 (JP)**
- **ARAI, Shigebumi**
  **Odawara-shi**
  **Kanagawa 250-0280 (JP)**

(74) Representative: **Cabinet Plasseraud**
**66, rue de la Chaussée d'Antin**
**75440 Paris Cedex 09 (FR)**


(54) **NOVEL COPOLYMER WITH CYCLIC HALAMINE STRUCTURE**


(57) The invention has an object to provide a copolymer, which enables to yield a coated film with a high transparency when formed into a coated film, and to add a regenerable antibacterial effect, as well as a resin composition containing the same. A copolymer of the invention is a copolymer including a repeating unit represented by the following formula (I) (wherein $R_1$ represents a hydrogen atom or a methyl group; $R_2$ represents a hydrogen atom or a saturated or unsaturated alkyl group having 1 to 18 carbon atoms; $R_{11}$ to $R_{14}$ each independently represent a hydrogen atom or an alkyl group, provided that at least 2 of $R_{11}$ to $R_{14}$ represent an alkyl group, and that $R_{11}$ and $R_{12}$, or $R_{13}$ and $R_{14}$ can bond together to form a ring; X represents -O- or -$NR_{20}$-; $R_{20}$ represents a hydrogen atom or an alkyl group; Y represents a halogen atom; and n represents 0 or 1), and a repeating unit having a crosslinkable functional group.

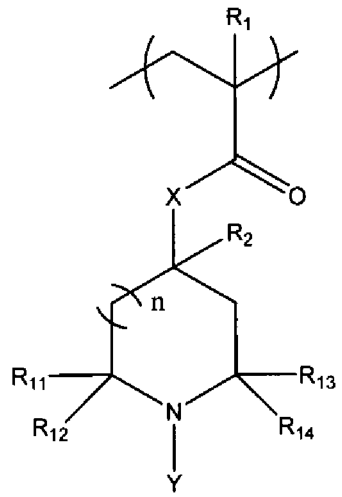

(I)



EP 3 078 683 A1

## Description

### Technical Field

The present invention relates to a copolymer having a repeating unit including a cyclic halamine structure, and further relates to a resin composition containing the same as well as a use thereof.

This application claims the priority of Japanese Patent Application No. 2013-250326 filed on 3 December 2013, the content of which is incorporated herein by reference.

### Background Art

It has been known that a polymer having a repeating unit including a cyclic halamine structure has a regenerable antibacterial effect, and, for example, an antibacterial composition containing a polymer obtained by polymerizing a compound represented by the following formula (III) is described Patent Document 1.

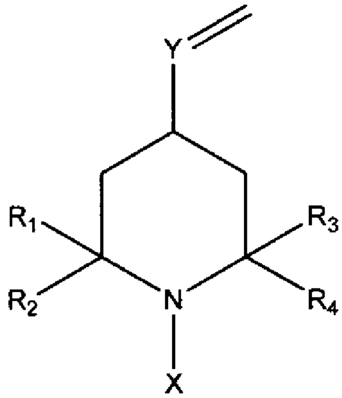

(III)

In the formula, $R_1$, $R_2$, $R_3$, $R_4$, and Y each represent a C1 to C40 alkyl group, a C1 to C40 alkylene group, a C1 to C40 alkenyl group, a C1 to C40 alkynyl group, a C1 to C40 aryl group, a C1 to C30 alkoxy group, a C1 to C40 alkyl carbonyl group, a C1 to C40 alkyl carboxyl group, a C1 to C40 amide group, a C1 to C40 carboxyl group, or a combination thereof; and X represents Cl, Br, or H.

Further, it is described in Patent Document 1 that a polymer consisting of the compound represented by the formula (III) is obtained by an emulsion polymerization, and that a water dispersion of the polymer may be optionally added into an aqueous emulsion paint for use.

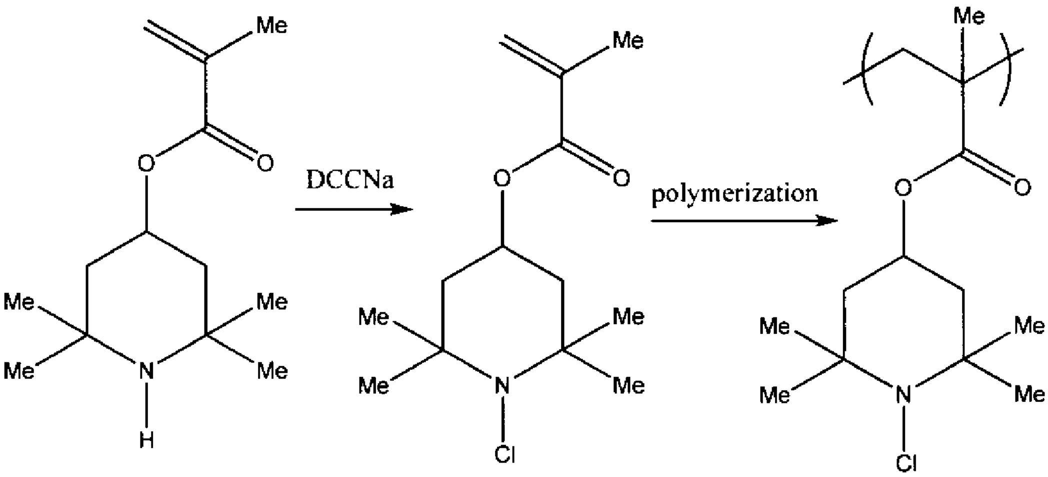

**Prior Art Documents**

**Patent Documents**

Patent Document 1: WO2009/158285

**Summary of the Invention**

**Object to be Solved by the Invention**

When a coated film is formed using a curable composition containing poly(N-chloro-2,2,6,6-tetramethyl-4-piperidinyl acrylate) described in Patent Document 1, a problem is that it is impossible to obtain a coated film with a high transparency.

The present invention was made under such circumstances with an object to provide a novel copolymer having a cyclic halamine structure, from which a coated film with a high transparency may be obtained when formed into a coated film. Another object is to provide a curable composition containing the copolymer.

**Means to Solve the Object**

The present inventors studied diligently to solve the objects and found that a copolymer including a repeating unit derived from a (meth)acrylic acid derivative having a specific cyclic halamine structure in the molecule, and a repeating unit containing a crosslinkable functional group may yield a coated film having a regenerable antibacterial-adding effect as well as a high transparency when formed into a coated film, thereby completing the present invention.

Specifically, the present invention relates to any one of:

(1) a copolymer comprising a repeating unit represented by the following formula (I):

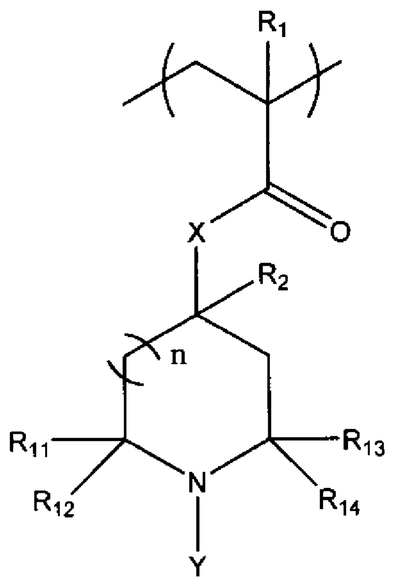

(I)

(wherein $R_1$ represents a hydrogen atom or a methyl group; $R_2$ represents a hydrogen atom or a saturated or unsaturated alkyl group having 1 to 18 carbon atoms; $R_{11}$ to $R_{14}$ each independently represent a hydrogen atom or an alkyl group, provided that at least 2 of $R_{11}$ to $R_{14}$ represent an alkyl group, and that $R_{11}$ and $R_{12}$, or $R_{13}$ and $R_{14}$ can bond together to form a ring; X represents -O- or-$NR_{20}$-; $R_{20}$ represents a hydrogen atom or an alkyl group; Y represents a halogen atom; and n represents 0 or 1), and a repeating unit having a crosslinkable functional group,

(2) the copolymer according to (1), wherein the copolymer comprises the repeating unit represented by formula (I) and the repeating unit having a crosslinkable functional group at a molar ratio of 99:1 to 1:99, and

(3) the copolymer according to (1) or (2), wherein the repeating unit having a crosslinkable functional group is a repeating unit represented by the following formula (II):

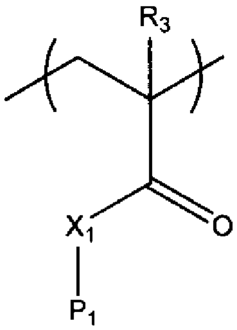

(II)

(wherein $R_3$ represents a hydrogen atom or a methyl group, $X_1$ represents an oxygen atom or a nitrogen atom optionally having a substituent, and $P_1$ represents a functional group comprising a crosslinkable functional group),
(4) the copolymer according to any one of (1) to (3), wherein the crosslinkable functional group is a group selected from the group consisting of an epoxy group, an oxetanyl group, a dioxanyl group, a carboxyl group, an unsaturated group having a carbon-carbon double bond, a hydroxyl group, an amino group having active hydrogen, an isocyanate group, an isothiocyanate group, a cyano group, a mercapto group, an azide group, a propargyl group, a benzocyclobutenyl group, and a crosslinkable silyl group,
(5) the copolymer according to any one of (1) to (4) having a weight-average molecular weight of 1,000 to 50,000.
Further, the present invention relates to:
(6) a curable composition comprising the copolymer according to any one of (1) to (5), a curable compound, and a polymerization initiator,
(7) a coating agent, a paint, or an adhesive comprising the curable composition according to (6),
(8) a cured product obtained by curing the curable composition according to (6), and
(9) a method for adding an antibacterial activity to a resin, comprising mixing the copolymer according to any one of (1) to (5) with the resin.

**Effect of the Invention**

Since the copolymer according to the present invention may add an antibacterial effect, which may be reactivated due to a function derived from a repeating unit having a specific cyclic halamine structure in the molecule, to a resin, and further may secure a favorable transparency of a coated film when used as an additive for a light- (heat-)curable resin, it has become possible that the same may be applied to a clear-type solvent paint or powder paint. The copolymer according to the present invention is suitable for a wide variety of uses, such as an additive for a resin, a curable composition, a coating agent, a resin molded body, an optical components, an optical film, an adhesive, a paint, military goods, medical and sanitary goods, and a food packaging material.

**Mode for Carrying Out the Invention**

The copolymer according to the present invention comprises in the molecule a repeating unit represented by the following formula (I) and a repeating unit having a crosslinkable functional group. It may comprise another repeating unit other than the repeating units.

(Concerning repeating unit represented by formula (I))

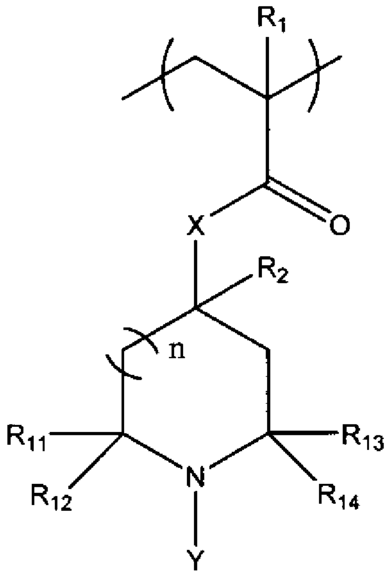

(I)

In the formula, $R_1$ represents a hydrogen atom, or a methyl group.

$R_2$ represents a hydrogen atom, or a saturated or unsaturated alkyl group having 1 to 18 carbon atoms, wherein the saturated or unsaturated alkyl group having 1 to 18 carbon atoms represents an alkyl group having 1 to 18 carbon atoms, an alkenyl group having 2 to 18 carbon atoms, or an alkynyl group having 2 to 18 carbon atoms.

Specifically, as the saturated or unsaturated alkyl group having 1 to 18 carbon atoms, an alkyl group having 1 to 18 carbon atoms, such as a methyl group, an ethyl group, a n-propyl group, an isopropyl group, a n-butyl group, an isobutyl group, a s-butyl group, a t-butyl group, a n-pentyl group, an isopentyl group, a s-pentyl group, a t-pentyl group, a neopentyl group, a n-hexyl group, a n-heptyl group, a n-octyl group, a n-nonyl group, a n-decyl group, a n-undecyl group, a n-dodecyl group, a n-tridecyl group, a n-tetradecyl group, a n-pentadecyl group, a n-hexadecyl group, a n-heptadecyl group, and a n-octadecyl group; an alkenyl group having 2 to 18 carbon atoms, such as a vinyl group, an allyl group, a 2-butenyl group, an oleyl group, and a linoleyl group; an alkynyl group having 2 to 18 carbon atoms, such as an acetylene group, a propargyl group, a 1-propynyl group, and a 2-butynyl group may be exemplified.

$R_{11}$ to $R_{14}$ each independently represent a hydrogen atom, or an alkyl group, and specifically, the same specific examples as the alkyl groups having 1 to 18 carbon atoms of $R_2$ may be exemplified, provided that at least 2 of $R_{11}$ to $R_{14}$ represent alkyl groups. Specifically, a case in which $R_{11}$ to $R_{14}$ are an alkyl group, a case in which $R_{11}$ to $R_{13}$ are an alkyl group, and $R_{14}$ is a hydrogen atom, a case in which $R_{11}$ and $R_{12}$ are an alkyl group, and $R_{13}$ and $R_{14}$ are hydrogen atoms, and a case in which $R_{11}$ and $R_{13}$ are an alkyl group, and $R_{12}$ and $R_{14}$ are hydrogen atoms, etc. may be exemplified. Among them, an alkyl group having 1 to 3 carbon atoms is preferable, a methyl group or an ethyl group is more preferable, and further preferably all of $R_{11}$ to $R_{14}$ are methyl groups.

Further, $R_{11}$ and $R_{12}$, or $R_{13}$ and $R_{14}$ may bond together to form a ring, and specifically a hydrocarbon chain having 2 to 10 carbon atoms, such as $-(CH_2)_m-$ (m represents an integer of 2 or higher), $-CH_2CH_2C(CH_3)_2CH_2CH_2-$, and $-CH(CH_3)-CH_2CH_2CH(CH_3)-$; and a hydrocarbon chain having 2 to 10 carbon atoms having an oxygen atom, a sulfur atom, a carbonyl group, or the like, such as $-CH_2CH_2OCH_2CH_2-$,$-CH_2CH_2SCH_2CH_2-$, and $-CH_2CH_2C(=O)CH_2CH_2-$, etc. may be exemplified.

X represents -O-, or $-NR_{20}-$, wherein $R_{20}$ represents a hydrogen atom or an alkyl group. Specifically, as an alkyl group, the same specific examples as the alkyl groups having 1 to 18 carbon atoms of $R_2$ may be exemplified, and among others -O- is preferable.

Y represents a halogen atom, and specifically represents a chlorine atom, a bromine atom, a fluorine atom, and iodine atom.

n represents 0 or 1.

As a repeating unit represented by formula (I), repeating units represented by the following formulae may be specifically exemplified.

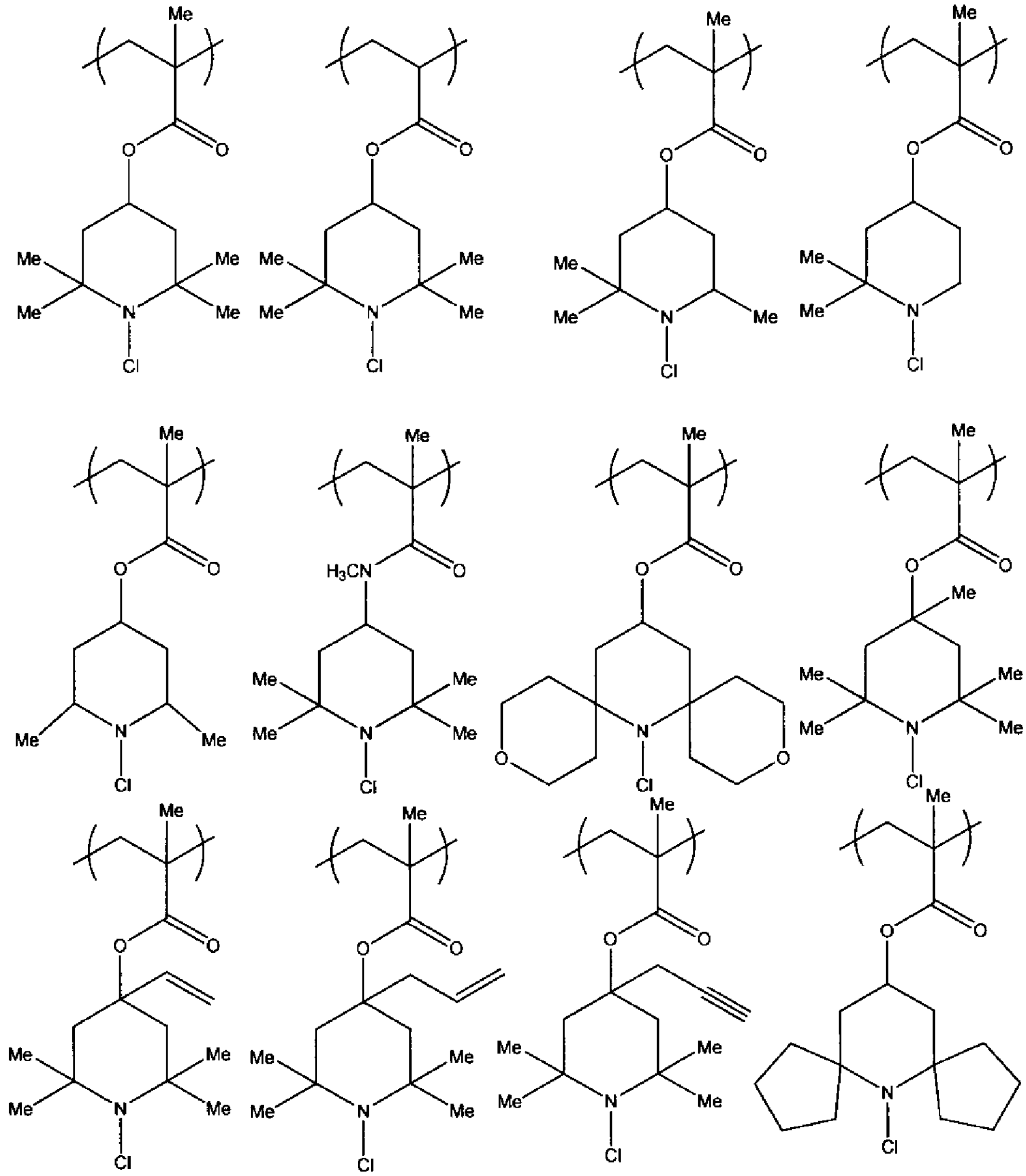

(Concerning repeating unit having crosslinkable functional group)

The repeating unit having a crosslinkable functional group according to the present invention is a repeating unit which may form a copolymer together with a repeating unit represented by formula (I), and is not particularly limited, as long as it has a crosslinkable functional site in the repeating unit thereof.

A crosslinkable functional group is not particularly limited, as long as it is a functional group that may form a 2-dimensional or 3-dimensional structure by reacting and bonding with a plurality of functional groups included in a cross-linking agent, or by bonding of linear polymer chains through self-condensation between the crosslinkable functional groups themselves.

Specifically, an epoxy group, an oxetanyl group, a dioxanyl group, a carboxyl group, an unsaturated group having a carbon-carbon double bond, a hydroxyl group, an amino group having active hydrogen, an isocyanate group, an isothiocyanate group, a cyano group, a mercapto group, an azide group, a propargyl group, a benzocyclobutenyl group, and a crosslinkable silyl group, etc. may be exemplified.

A repeating unit having a crosslinkable functional group, which may form a copolymer together with a repeating unit represented by formula (I), is not particularly limited, as long as it is a repeating unit derived from a monomer having a double bond capable of a polymerization reaction with a (meth)acrylic acid derivative, which is a monomer derived to a repeating unit represented by formula (I). Specifically, repeating units represented by the following formulas may be exemplified.

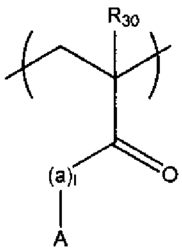 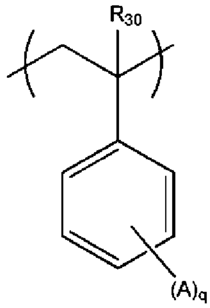 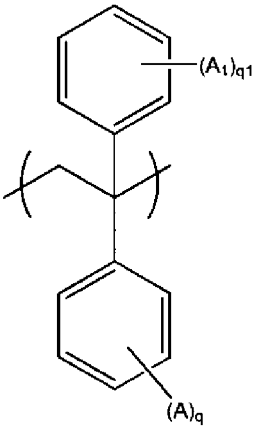 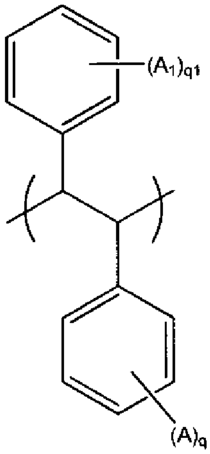 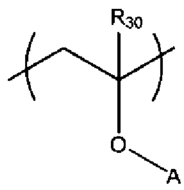

In the formula, $R_{30}$ represents a hydrogen atom, or a methyl group, a represents a divalent linking group, A and $A_1$ each independently represent a site including a crosslinkable functional group, 1 represents 0 or 1, and q and q1 each independently represent any of integers of 1 to 5. Among others, a repeating unit derived from a (meth)acrylic acid derivative is preferable.

Further, as a specific example of a repeating unit having a crosslinkable functional group, repeating units represented by the following formulas may be exemplified.

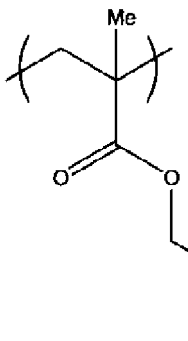 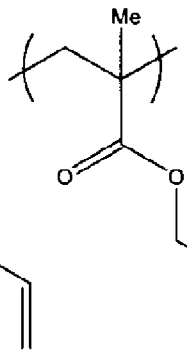 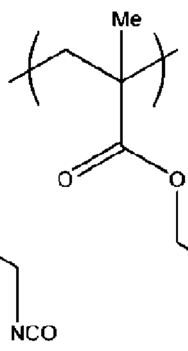 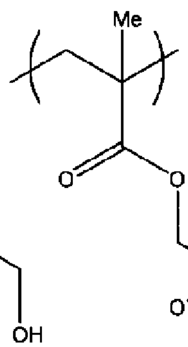 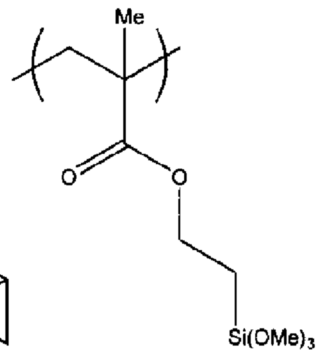

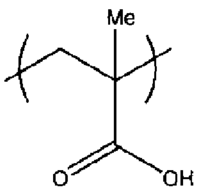 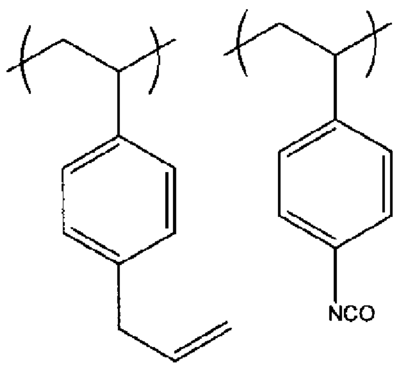 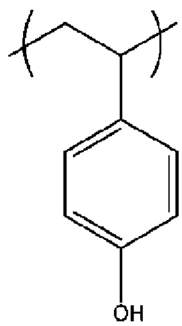 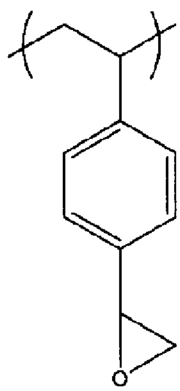

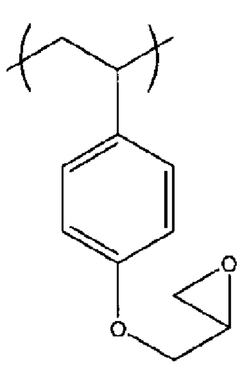
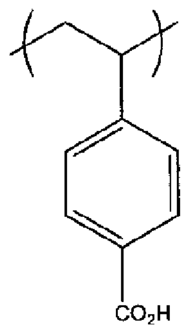
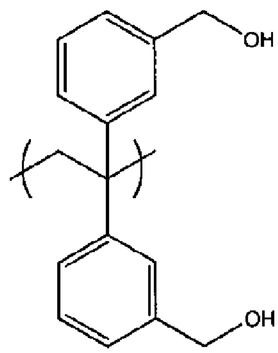
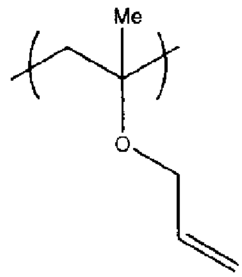

(Concerning copolymer)

The molecular weight of a polymer according to the present invention is not particularly limited, but the weight-average molecular weight (Mw) measured with gel permeation chromatography (calibrated with standard styrene) (hereinafter abbreviated as "GPC") is preferably in range of 1,000 to 50,000, more preferably 1,000 to 30,000, and further preferably 2,000 to 10,000. Further, the ratio (Mw/Mn) of a weight-average molecular weight (Mw) to a number average molecular weight (Mn) measured with GPC is preferably in a range of 1.01 to 10.0, more preferably 1.01 to 5.00, further preferably 1.01 to 3.00, further preferably 1.01 to 2.00, and still further preferably 1.01 to 1.50.

The structure of a polymer according to the present invention may take any structure, such as a random type, a block type, a star type, a hyperbranched type, and a graft type. Specifically, a random structure, in which a repeating unit represented by formula (I) and a repeating unit having a crosslinkable functional group are bonded arbitrarily in a main chain; a block structure, in which a block with repeating units represented by formula (I) and a block with repeating units having a crosslinkable functional group are bonded in a main chain; a graft type structure, in which a repeating unit represented by formula (I) is included in a main chain, and a repeating unit having a crosslinkable functional group is included in a side chain; and a star type structure, in which a repeating unit represented by formula (I) is included in a core, and a repeating unit having a crosslinkable functional group is included in arms, etc. may be exemplified.

The molar ratio of a repeating unit represented by formula (I) to a repeating unit having a crosslinkable functional group in constituent units constituting a copolymer [(repeating unit represented by formula (I)) / (repeating unit having a crosslinkable functional group)] is not particularly limited, but is preferably in a range of 95/5 to 5/95, more preferably 90/10 to 20/80, further preferably 80/20 to 30/70, and still further preferably 60/40 to 40/60.

A copolymer according to the present invention optionally contains in addition to a repeating unit represented by formula (I), and a repeating unit having a crosslinkable functional group, another repeating unit. Such a repeating unit is not particularly limited, as long as it is a repeating unit capable of forming a copolymer with a repeating unit represented by formula (I), and a repeating unit having a crosslinkable functional group. Specifically, repeating units derived from styrene, α-methylstyrene, 4-chlorostyrene, methyl (meth)acrylate, n-butyl (meth)acrylate, and benzyl (meth)acrylate, etc. may be exemplified.

The method for producing a copolymer according to the present invention is not particularly limited, as long as it is a method capable of introducing a repeating unit represented by formula (I) and a repeating unit having a crosslinkable functional group in the molecule. Specifically, a method for producing a copolymer by polymerizing monomers capable of being derived to the respective repeating units, and a method for producing a copolymer by introducing a predetermined functional group by a polymer reaction, etc. may be exemplified.

As a monomer capable of being derived to a repeating unit represented by formula (I) and also capable of being polymerized, specifically a monomer represented by the following formula (III) may be exemplified.

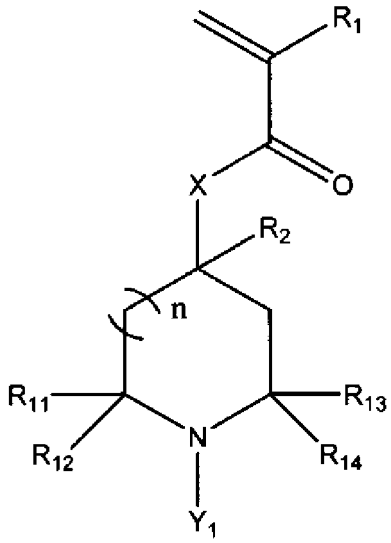

(III)

In the formula, $R_1$, $R_2$, $R_{11}$ to $R_{14}$, and n have the same meanings as in formula (I), and $Y_1$ represents a hydrogen atom, a halogen atom, or a protecting group. When $Y_1$ is a hydrogen atom, by introducing a halogen atom using a halogenating agent after polymerization, and when $Y_1$ is a protecting group, by deprotection, and halogenation with a halogenating agent after polymerization, an objective repeating unit may be obtained.

As a monomer represented by formula (III), specifically the following compounds may be exemplified.

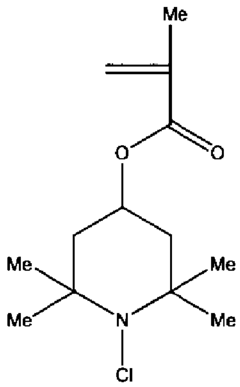
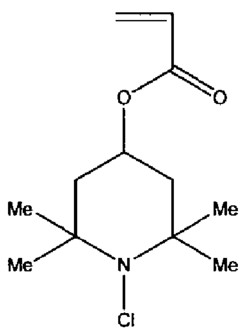
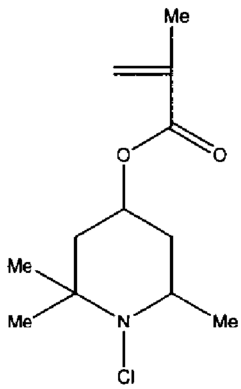
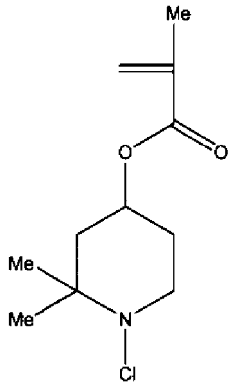

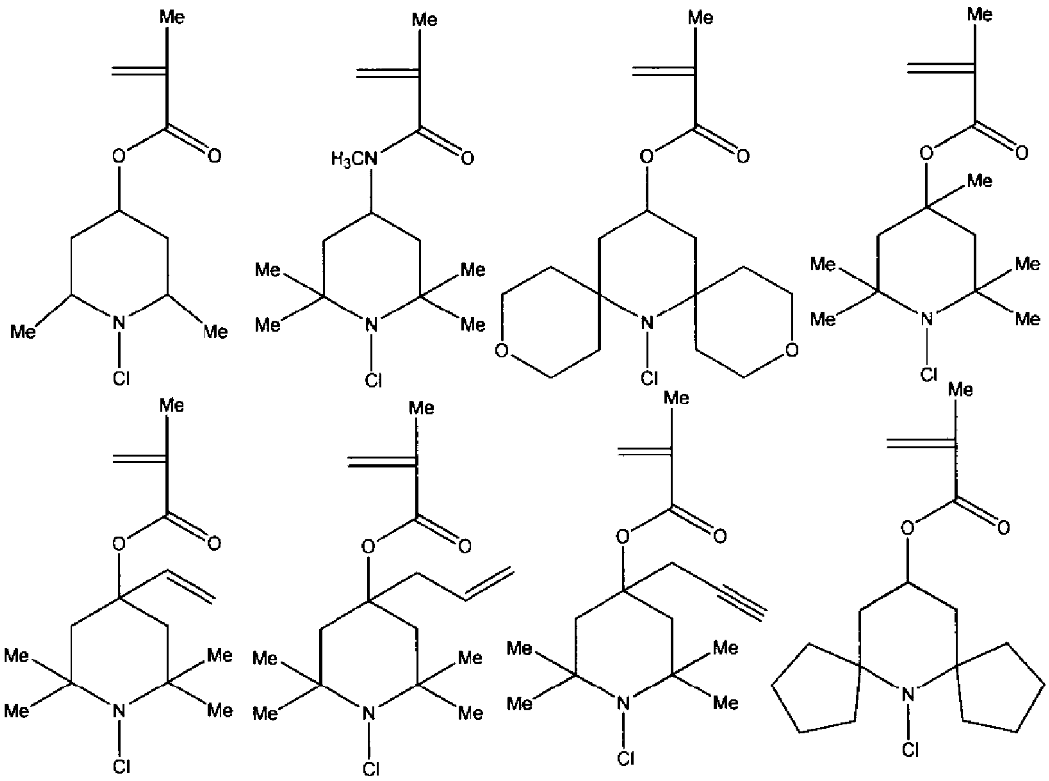

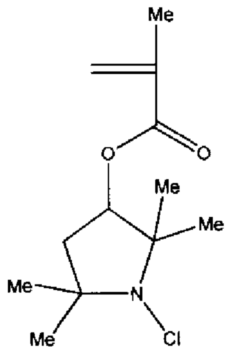

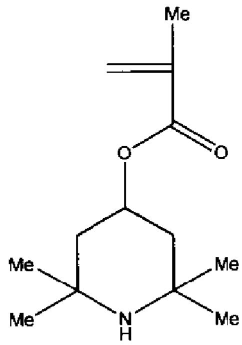

Among them, 2,2,6,6-tetramethyl-4-piperidyl methacrylate, and 2,2,6,6-tetramethyl-N-chloro-4-piperidyl methacrylate are preferable.

As a monomer capable of being derived to a repeating unit having a crosslinkable functional group and also capable of being polymerized, specifically a (meth)acrylic acid ester derivative, or a (meth)acrylic acid amide derivative having a crosslinkable functional group to be selected from an epoxy group, an oxetanyl group, a carboxyl group, an unsaturated group having a carbon-carbon double bond, a hydroxyl group, an amino group having active hydrogen, an isocyanate group, a crosslinkable silyl group, etc. may be exemplified. More specifically, the following polymerizable monomers may be exemplified, and these may be used alone or used by combination of two or more thereof.

As a polymerizable monomer to be used for forming a repeating unit having an epoxy group, specifically glycidyl (meth)acrylate, glycidyl $\alpha$-n-propyl(meth)acrylate, 3,4-epoxybutyl (meth)acrylate, and a compound having an alicyclic epoxy skeleton such as 3,4-epoxycyclohexylmethyl (meth)acrylate may be exemplified, and among others glycidyl (meth)acrylate is preferable.

As a polymerizable monomer to be used for forming a repeating unit having an oxetanyl group, specifically 3-((meth)acryloyloxymethyl)oxetane, 3-((meth)acryloyloxymethyl)-3-ethyloxetane, and 3-((meth)acryloyloxymethyl)-2-methyloxetane, etc. may be exemplified, and among others 3-((meth)acryloyloxymethyl)oxetane is preferable.

As a polymerizable monomer to be used for forming a repeating unit having a carboxyl group, specifically (meth)acrylic acid may be exemplified. In this regard, after polymerization of a protected carboxyl group, namely an ester group, etc., a carboxyl group may be obtained by deprotection. As a polymerizable monomer for such a case, tert-butyl (meth)acrylate, 1-ethoxyethyl (meth)acrylate, and tetrahydropyranyl (meth)acrylate, etc. may be specifically exemplified.

As a polymerizable monomer to be used for forming a repeating unit having an unsaturated group having a carbon-carbon double bond, specifically allyl (meth)acrylate, and vinyl (meth)acrylate, etc. may be exemplified. Among others, allyl (meth)acrylate is preferable.

As a polymerizable monomer to be used for forming a repeating unit having a hydroxyl group, specifically 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, and dipentaerythritol hexa(meth)acrylate, etc. may be exemplified.

As a polymerizable monomer to be used for forming a repeating unit having an amino group having active hydrogen, specifically dimethylaminoethyl (meth)acrylate, N-methylaminoethyl (meth)acrylamide, (meth)acrylamide, and N-methylol acrylamide, etc. may be exemplified.

As a polymerizable monomer to be used for forming a repeating unit having an isocyanate group, specifically isocyanatoethyl (meth)acrylate, m-isopropenyl-$\alpha$,$\alpha$-dimethylbenzyl isocyanate (meth)acrylate, a half-blocked isophorone diisocyanate with 2-hydroxyethyl (meth)acrylate or 2-hydroxypropyl (meth)acrylate, a half-blocked 1,6-hexamethylene diisocyanate with 2-hydroxyethyl (meth)acrylate or 2-hydroxypropyl (meth)acrylate, and a half-blocked tolylene diisocyanate with 2-hydroxyethyl (meth)acrylate or 2-hydroxypropyl (meth)acrylate, etc. may be exemplified.

As a polymerizable monomer to be used for forming a repeating unit having a crosslinkable silyl group, specifically $\gamma$-(meth)acryloxypropyl trimethoxysilane, $\gamma$-(meth)acryloxypropyl methyldimethoxysilane, and $\gamma$-(meth)acryloxypropyl triethoxysilane, etc. may be exemplified.

The above crosslinkable functional group may be, if necessary, protected in advance with a protecting group, and used, if necessary, after elimination of the protecting group.

A polymerization method for the monomer described above is not particularly limited, and a polymerization method, such as an anionic polymerization method, a radical polymerization method, a group transfer polymerization method, and a suspension polymerization method, may be used. Among others, a controlled polymerization, such as a living anion polymerization method, and a living radical polymerization method using a chain transfer agent, is preferable. Further, a living anion polymerization method is preferable from viewpoints that the molecular weight and structure of a copolymer may be controlled, and a monomer having a crosslinkable functional group may be sometimes directly copolymerized.

Specifically, as a polymerization initiator to be used in a living anion polymerization method, an organoalkaline metal, an organoalkaline earth metal, 1,1-diphenylethylene, and a carbanion derived from stilbene, etc. may be exemplified. Further specifically, ethyllithium, n-butyllithium, sec-butyllithium, t-butyllithium, ethylsodium, lithium biphenyl, lithium naphthalene, sodium naphthalene, potassium naphthalene, $\alpha$-methylstyrene naphthalene dianion, 1,1-diphenylhexyllithium, 1,1-diphenyl-3-methylpentyllithium, 1,4-dilithio-2-butene, 1,6-dilithio hexane, poly(styryl)lithium, cumyl potassium, and cumyl cesium, etc. may be exemplified. The polymerization initiators may be used alone or used by combination of two or more thereof.

The polymerization temperature is generally -80°C to 40°C, and more preferably -60°C to 0°C. The reaction is generally completed within 5 min to 1 hour.

A solvent to be used for a living anion polymerization is not particularly limited, as long as it is a solvent compatible with a polymerizable monomer, an oligomer, or a polymer. Specifically, an ether compound, such as diethyl ether, tetrahydrofuran (THF), dioxane, and trioxane, a nonpolar solvent, or a low polarity solvent, such as an aliphatic, an aromatic, or an alicyclic hydrocarbon compound including hexane and toluene, may be exemplified. The solvents may be used alone or used as a mixed solvent of two or more thereof.

As a method for introducing a cyclic halamine structure in a polymer according to the present invention into a polymer, a method comprising polymerizing a monomer having a cyclic amine structure represented by the following formula (IV), and then halogenating the N-H bond may further be exemplified.

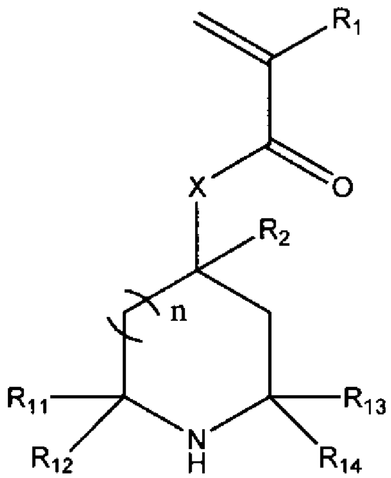

(IV)

In the formula, $R_1$, $R_2$, $R_{11}$ to $R_{14}$, X, and n have the same meanings as in formula (III).

A method for converting a cyclic amine site to an N-halogenated cyclic amine is not particularly limited, and specifically a method comprising treating a copolymer having a cyclic amine site with a halogenating agent, etc. may be exemplified. As a halogenating agent, specifically a halogen, such as chlorine, bromine, iodine, and fluorine, sodium dihaloisocyanurate, sodium hypohalogenide, N-halosuccinimide, 1,3-dihalohydantoin, and calcium hypohalogenide may be exemplified. In this regard, halo represents chlorine, bromine, fluorine, or iodine.

Further, a halamine structure is occasionally reduced to an N-H structure, and when the same is treated with a halogenating agent, a halamine structure may be regenerated.

As a method for introducing a crosslinkable functional group, a method for introducing a crosslinkable functional group by converting a functional group after polymerization may be exemplified. Specifically, a method comprising introducing an epoxy group, or a hydroxyl group by oxidation of a double bond site, and a method comprising introducing a crosslinkable silyl group by adding hydroxysilane to a double bond, etc. may be exemplified.

(Curable composition and cured product)

A curable composition according to the present invention includes, in addition to the copolymer a curable compound, and a polymerization initiator. A curing reaction may be conducted by heating or light irradiation.

A method for heating is not particularly limited, and a conventionally known heating method such as a heater may be applied.

As light to be used for light irradiation, specifically ultraviolet light, visible light, an X-ray, and an electron beam, etc. may be exemplified, and ultraviolet light may be preferably exemplified. Since ultraviolet light has a high energy, a curing reaction may be promoted by irradiating a curable composition with ultraviolet light, so that a curing speed of a curable composition may be increased, and also that the amount of an unreacted curable composition in a cured product may be reduced.

As a light source for visible light, specifically an incandescent bulb, and a fluorescent lamp, etc. may be exemplified. As a light source for ultraviolet light, specifically an electrode-typed metal halide lamp, a xenon lamp, a low pressure mercury lamp, a high pressure mercury lamp, and an ultrahigh pressure mercury lamp, and an electrodeless-typed excimer lamp, and a metal halide lamp, may be exemplified. When ultraviolet light is used, its wavelength range is not particularly limited, but it is preferably from 150 nm to 400 nm, and further preferably from 200 nm to 380 nm. As an atmosphere for irradiation with ultraviolet light, an inert gas atmosphere, such as a nitrogen gas, and a carbon dioxide, or an atmosphere with a reduced oxygen concentration is preferable, however an ordinary air atmosphere is also possible, and an irradiation atmosphere temperature may be ordinarily from 10 to 200°C.

Since the curing status may be measured using a Fourier transform infrared spectroscopic analyzer, a photochemical reaction calorimeter, or the like, curing conditions (irradiation time with light, light intensity, etc., heating temperature, heating time, etc.) may be selected appropriately for complete curing of a cured product.

A curable compound means a compound or a resin having a functional group, which causes a polymerization reaction by heat or light irradiation in the presence of a polymerization initiator, and a (meth)acrylate compound, an epoxy resin, and a vinyl compound excluding an acrylate compound, etc. may be exemplified. These may be used alone or used by combination of two or more thereof.

As a (meth)acrylate compound, polyurethane (meth)acrylate, polyester (meth)acrylate, epoxy (meth)acrylate, polyamide (meth)acrylate, polybutadiene (meth)acrylate, polystyryl (meth)acrylate, polycarbonate diacrylate, tripropylene glycol di(meth)acrylate, hexanediol di(meth)acrylate, trimethylolpropane tri(meth)acrylate, pentaerythritol tri(meth)acrylate, trimethylolpropane tri(meth)acrylate, ditrimethylolpropane tetra(meth)acrylate, pentaerythritol tri(meth)acrylate, pentaerythritol tetra(meth)acrylate, dipentaerythritol penta(meth)acrylate, dipentaerythritol hexa(meth)acrylate, glycerol tri(meth)acrylate, tris(2-hydroxyethyl)isocyanurate tri(meth)acrylate, ethylene glycol di(meth)acrylate, 1,3-butanediol di(meth)acrylate, 1,4-butanediol di(meth)acrylate, 1,6-hexanediol di(meth)acrylate, neopentylglycol di(meth)acrylate, diethylene glycol di(meth)acrylate, triethylene glycol di(meth)acrylate, dipropylene glycol di(meth)acrylate, bis(2-hydroxyethyl)isocyanurate di(meth)acrylate, a poly(meth)acrylate of an ethylene oxide or propylene oxide adduct to a polyhydric alcohol, an oligoester (meth)acrylate having 2 or more (meth)acryloyl groups in the molecule, an oligoether (meth)acrylate, an oligourethane (meth)acrylate, an oligoepoxy (meth)acrylate, a siloxane polymer having a (meth)acryloyloxy group or the like may be exemplified.

As an epoxy resin, a glycidyl ether epoxy resin obtained by a reaction of bisphenol A, bisphenol F, bisphenol AD, bisphenol S, naphthalene diol, hydrogenate bisphenol A, etc. with epichlorohydrin; a novolac resin obtained by condensation or co-condensation of a phenol compound with an aldehyde compound followed by epoxidation, such as an ortho-cresol novolac epoxy resin; a glycidyl ester epoxy resin obtained by a reaction of a polybasic acid, such as phthalic acid, and dimer acid, with epichlorohydrin; a glycidyl amine epoxy resin obtained by a reaction of a polyamine, such as diaminodiphenylmethane, and isocyanuric acid, with epichlorohydrin; and a linear aliphatic epoxy resin, an alicyclic epoxy resin obtained by oxidizing an olefinic bond with a peracid such as peracetic acid or the like may be exemplified.

As a vinyl compound excluding an acrylate compound, an aromatic vinyl compound, such as styrene, vinyltoluene, $\alpha$-methylstyrene, divinylbenzene or the like may be exemplified.

A radical polymerization initiator, a kind of a polymerization initiator, is a compound that releases by light irradiation and/or heating a substance for initiating radical polymerization, and specifically an organic peroxide, an imidazole derivative, a bisimidazole derivative, an N-arylglycine derivative, an organic azide compound, a titanocene, an aluminate complex, an N-alkoxypyridinium salt, a thioxanthone derivative or the like may be exemplified. Specifically, as an organic peroxide, a hydroperoxide, such as t-butyl hydroperoxide, p-menthane hydroperoxide, cumene hydroperoxide, and diisopropylbenzene hydroperoxide; a peroxy ester, such as t-butyl peroxylaurate, t-butyl peroxybenzoate, and t-butyl peroxydecanoate; a peroxyketal such as 1,5-di-t-butyl peroxy-3,3,5-trimethylcyclohexane; a ketone peroxide such as ethyl acetoacetate peroxide; and a diacyl peroxide such as benzoyl peroxide may be specifically exemplified. Furthermore, benzoin, benzoin isopropyl ether, benzoin isobutyl ether, 2,2-diethoxyacetophenone, 2,2-dimethoxyphenylacetophenone, 2-ethylanthraquinone, 1,3-di(tert-butyl dioxycarbonyl)benzophenone, 4,4'-tetrakis (tert-butyl dioxycarbonyl)benzophenone, 3-phenyl-5-isooxazolone, 2-mercaptobenzimidazole, bis(2,4,5-triphenyl)imidazole, 2,2-dimethoxy-1,2-diphenyl ethan-1-one (trade name IRGACURE(R) 651, produced by BASF SE), 1-hydroxy-cyclohexyl-phenyl-ketone (trade name IRGACURE(R) 184, produced by BASF SE), 2-benzyl-2-dimethylamino-1-(4-morpholinophenyl)-butan-1-one (trade name IRGACURE(R) 369, produced by BASF SE), bis($\eta$5-2,4-cyclopentadien-1-yl)-bis(2,6-difluoro-3-(1H-pyrrol-1-yl)-phenyl)titanium (trade name IRGACURE(R) 784, produced by BASF SE), and 2-methyl-1-(4-methylthiophenyl)-2-morpholinopropan-1-one (trade name IRGACURE(R) 907, produced by BASF SE), etc. may be exemplified. The radical polymerization initiators may be used alone or used by combination of two or more thereof.

To a curable composition or a cured product according to the present invention, another component may be added or mixed according to purpose, as long as its properties are not deteriorated. As such a component, a filler, a flame retardant, a plasticizer, an antistatic agent or the like may be exemplified.

## Examples

The present invention will be explained more specifically below referring to Examples, but the present invention is not intended to be limited to the following Examples.

(Production of polymer)

[Example 1]

Into a 200 mL flask, 104.33 g of tetrahydrofuran (hereinafter abbreviated as "THF"), 0.17 g of lithium chloride were added, and after cooling down to -60°C, 3.37 g of n-butyllithium (15.4 wt% concentration hexane solution), and 0.81 g of diisopropyl amine were added, and the mixture was stirred for 15 min. Then, 0.87 g of methyl isobutyrate was added, followed by stirring for 15 min. Then, 15.38 g of 2,2,6,6-tetramethyl-4-piperidinyl methacrylate (hereinafter abbreviated as "TMPMA"), and 15.38 g of allyl methacrylate dissolved in 28.92 g of THF were added dropwise over 40 min, and the mixture was matured for 15 min. After the disappearance of monomers was confirmed by GC measurement of partially sampled mixture, the reaction was stopped by adding 1.2 g of methanol.

The obtained copolymer was analyzed by GPC (using THF as a mobile phase, and poly(methyl methacrylate)

as a calibration standard (hereinafter abbreviated as "PMMA standard")) to find that the molecular weight (Mn) was 3,860, and the molecular weight distribution (Mw/Mn) was 1.11.

Water in an amount 1.25 times as much as the monomers, and ethyl acetate in an amount 1/9 as much as THF were added, and the mixture was separated. Then, 76.3 g of a sodium hypochlorite solution was added, and a chlorination reaction was conducted by maturation at room temperature for 1 hour. After separation, an organic layer was washed with water 3 times. The organic layer was concentrated, then prepared to a 30% THF solution, and reprecipitated with a large amount of water. The obtained copolymer was dried in vacuo to obtain 32.76 g of a white powder.

The obtained polymer was analyzed by GPC (using THF as a mobile phase, and PMMA standard) to find that the molecular weight (Mn) was 4,850, and the molecular weight distribution (Mw/Mn) was 1.11.

The chlorine concentration in the copolymer was 6.8% (theoretical value 7.3%) according to an ICP-AES analysis.

[Example 2]

Into a 200 mL flask, 90.30 g of THF, 0.16 g of lithium chloride were added, and after cooling down to - 60°C, 3.25 g of n-butyllithium (15.4 wt% concentration hexane solution), and 0.83 g of diisopropyl amine were added, and the mixture was stirred for 15 min. Then, 0.84 g of methyl isobutyrate was added, followed by stirring for 15 min. Then, 15.21 g of TMPMA, and 15.21 g of glycidyl methacrylate dissolved in 28.26 g of THF were added dropwise over 40 min, and the mixture was matured for 15 min. After the disappearance of monomers was confirmed by GC measurement of partially sampled mixture, the reaction was stopped by adding 1.2 g of methanol.

The obtained copolymer was analyzed by GPC (using THF as a mobile phase, and PMMA standard) to find that the molecular weight (Mn) was 3,410, and the molecular weight distribution (Mw/Mn) was 1.24.

Water in an amount 1.25 times as much as the monomers, and ethyl acetate in an amount 1/9 as much as THF were added, and the mixture was separated. Then, 60.2 g of a sodium hypochlorite solution was added, and a chlorination reaction was conducted by maturation at room temperature for 1 hour. After separation, an organic layer was washed with water 3 times. The organic layer was concentrated, then prepared to a 30% THF solution, and reprecipitated with a large amount of water. The obtained copolymer was dried in vacuo to obtain 32.11 g of a white powder.

The obtained copolymer was analyzed by GPC (using THF as a mobile phase, and PMMA standard) to find that the molecular weight (Mn) was 5,180, and the molecular weight distribution (Mw/Mn) was 1.33.

The chlorine concentration in the copolymer was 7.7% (theoretical value 7.3%) according to an ICP-AES analysis.

[Example 3]

Into a 200 mL flask, 97.23 g of THF, 0.34 g of lithium chloride were added, and after cooling down to - 60°C, 4.8 mL of n-butyllithium (15.4 wt% concentration hexane solution), and 0.80 g of diisopropyl amine were added, and the mixture was stirred for 15 min. Then, 0.82 g of methyl isobutyrate was added, followed by stirring for 15 min. Then, 9.24 g of N-chloro-2,2,6,6-tetramethyl-4-piperidyl methacrylate, and 16.78 g of 1-ethoxyethyl methacrylate dissolved in 9.24 g of THF were added dropwise over 30 min, and the mixture was matured for 45 min. After the disappearance of monomers was confirmed by GC measurement of partially sampled mixture, the reaction was stopped by adding 1.21 g of methanol and 0.37 g of acetic acid.

The obtained polymer was analyzed by GPC (using THF as a mobile phase, and PMMA standard) to find that the molecular weight (Mn) was 3,720, and the molecular weight distribution (Mw/Mn) was 1.14.

Ethyl acetate in an amount 1/2 as much as THF and water of the same weight were added, and the mixture was separated. An organic layer was concentrated, and prepared to a 30% THF solution, to which methanol of the same weight as the monomers and 1 mol/L-concentration hydrochloric acid were added and the mixture was stirred at room temperature for 3 hours. 370 g of ethyl acetate and 100 g of water were added, and the mixture was separated. The water layer was concentrated, and then dropped in a large amount of acetone to precipitate. The obtained precipitate was dried in vacuo to obtain 8.9 g of a white powder.

The chlorine concentration in the copolymer was 4.8% (theoretical value 5.6%) according to an ICP-AES analysis.

[Example 4]

Into a 200 mL flask, 75.30 g of THF and 0.11 g of lithium chloride were added, and cooled down to -60°C. 2.03 g of n-butyllithium (15.4 wt% concentration hexane solution), and then 0.63 g of diisopropyl amine were added, and the mixture was stirred for 10 min. Then, 12.24 g of TMPMA dissolved in THF (50% THF solution) was added dropwise over 15 min, and the mixture was stirred for 20 min. After the disappearance of monomers was confirmed by GC measurement

of partially sampled mixture, the obtained polymer was analyzed by GPC (using DMF as a mobile phase, and PMMA standard) to find that the molecular weight (Mn) was 2,340, and the molecular weight distribution (Mw/Mn) was 1.17.

Then, 7.75 g of glycidyl methacrylate (hereinafter abbreviated as "GMA") was dropped over 10 min, and the mixture was stirred for 15 min. After the disappearance of monomers was confirmed by GC measurement of partially sampled mixture, the reaction was stopped by adding 0.8 g of methanol. The obtained copolymer was analyzed by GPC (using DMF as a mobile phase, and PMMA standard) to find that the molecular weight (Mn) was 4,340, and the molecular weight distribution (Mw/Mn) was 1.19.

Water in an amount 1.25 times as much as the monomers, ethyl acetate in an amount 1/9 as much as THF were added, and the mixture was separated. Then, 48.5 g of a sodium hypochlorite solution was added, and a chlorination reaction was conducted by maturation at room temperature for 1 hour. After separation, an organic layer was washed with water 3 times. The organic layer was concentrated, then prepared to a 30% THF solution, and reprecipitated with a large amount of methanol. The obtained copolymer was dried in vacuo to obtain 20.85 g of a white powder.

The obtained copolymer was analyzed by GPC (using DMF as a mobile phase, and PMMA standard) to find that the molecular weight (Mn) was 5,520, and the molecular weight distribution (Mw/Mn) was 1.20.

The chlorine concentration in the copolymer was 9.0% (theoretical value 8.8%) according to an ICP-AES analysis.

[Example 5]

Into a 200 mL flask, 89.37 g of THF, 0.14 g of lithium chloride were added, and after cooling down to - 60°C, 2.05 g of n-butyllithium (15.4 wt% concentration hexane solution), and 0.60 g of diisopropyl amine were added, and the mixture was stirred for 15 min. Then, 0.55 g of methyl isobutyrate was added, followed by stirring for 15 min. Then, 9.53 g of N-chloro-2,2,6,6-tetramethyl-4-piperidyl methacrylate, and 9.53 g of allyl methacrylate dissolved in 5.82 g of THF were added dropwise over 15 min, and the mixture was matured for 30 min. After the disappearance of monomers was confirmed by GC measurement of partially sampled mixture, the reaction was stopped by adding 0.8 g of methanol.

The obtained polymer was analyzed by GPC (using THF as a mobile phase, and PMMA standard) to find that the molecular weight (Mn) was 4,760, and the molecular weight distribution (Mw/Mn) was 1.22.

Water in an amount 1.25 times as much as the monomers, ethyl acetate in an amount 1/9 as much as THF were added, and the mixture was separated. The organic layer was concentrated, then prepared to a 30% THF solution, and reprecipitated with a large amount of water. The obtained polymer was dried in vacuo to obtain 18.88 g of a white powder.

The chlorine concentration in the copolymer was 6.6% (theoretical value 6.8%) according to an ICP-AES analysis.

[Comparative Example 1]

Into a 1,000 mL flask, 376.57 g of THF, 0.60 g of lithium chloride were added, and cooled down to -60°C. 10.75 g of n-butyllithium (15.4 wt% concentration hexane solution), and 2.65 g of diisopropyl amine were added, and the mixture was stirred for 15 min. Then, 101.17 g of TMPMA dissolved in 101.40 g of THF was added dropwise over 60 min, and the mixture was matured for 15 min. After the disappearance of monomers was confirmed by GC measurement of partially sampled mixture, the reaction was stopped by adding 4.0 g of methanol.

The obtained homopolymer was analyzed by GPC (using DMF as a mobile phase, and PMMA standard) to find that the molecular weight (Mn) was 3,850, and the molecular weight distribution (Mw/Mn) was 1.11.

Water in an amount 1.25 times as much as the monomers, ethyl acetate in an amount 1/9 as much as THF were added, and the mixture was separated. Then, 401.1 g of a sodium hypochlorite solution was added, and a chlorination reaction was conducted by maturation at room temperature for 1 hour. After separation, an organic layer was washed with water 3 times. The organic layer was concentrated, then prepared to a 30% THF solution, and reprecipitated with a large amount of methanol. The obtained homopolymer was dried in vacuo to obtain 105.77 g of a white powder.

The obtained homopolymer was analyzed by GPC (using DMF as a mobile phase, and PMMA standard) to find that the molecular weight (Mn) was 5,180, and the molecular weight distribution (Mw/Mn) was 1.10.

The chlorine concentration in the homopolymer was 13.9% (theoretical value 13.6%) according to an ICP-AES analysis.

[Comparative Example 2]

Into a 1,000 mL flask, 93.60 g of Chimassorb(R) 2020FDL (produced by BASF SE) was added together with 300 mL of chloroform and dissolved. After addition of an aqueous solution of sodium dichloroisocyanurate (32%, 292.33 g), the mixture was matured at room temperature for 3 hours still in an inhomogeneous state. After removing insolubles

by filtration, the mixture was separated and the liquid was washed twice with water. The organic layer was concentrated, then prepared to a 30% THF solution, and reprecipitated with a large amount of methanol. The obtained polymer was dried in vacuo to obtain 98.33 g of a white powder.

The chlorine concentration in the polymer was 15.7% according to an ICP-AES analysis.

(Production of light cured thin film)

[Example 6]

In a 100 mL flask, 40 g of THF, 2.8 g of the copolymer obtained in Example 1, 17.2 g of dipentaerythritol hexaacrylate (DPHA), and 0.8 g of a photopolymerization initiator (2-methyl-1-(4-methylthiophenyl)-2-morpholinopropan-1-one, Irgacure(R) 907 (produced by BASF SE) were mixed to obtain a light curable composition.

The light curable composition was coated on a glass substrate by a #12 bar coater, and dried at 80°C for 3 min in a hot air circulating drier. Then, the glass substrate was irradiated with ultraviolet light from a light condensing high pressure mercury lamp (single lamp type, emitting UV light with wavelengths of 365 nm, 313 nm, 254 nm as main components, 120 W/cm, lamp height 9.8 cm, conveyor speed 5.7 m/min, produced by Eye Graphics Co., Ltd.) at a cumulative radiant fluence of 400 mJ/$cm^2$ (254 nm) to obtain a light cured thin film with a film thickness of 2 μm.

[Comparative Example 3]

A light cured thin film was obtained by the same method as Example 6, except that the homopolymer obtained in Comparative Example 1 was used instead of the copolymer obtained in Example 1.

[Comparative Example 4]

A light cured thin film was obtained by the same method as Example 6, except that the polymer obtained in Comparative Example 2 was used instead of the copolymer obtained in Example 1.

(Evaluation of physical properties of light cured thin film)

<Measuring methods for haze, and total light transmittance>

Measurements were conducted according to JIS K 7105. For the measurements a haze meter NDH-300A produced by Nippon Denshoku Industries Co., Ltd. was used. Total light transmittance (TT) is the percentage of the total amount of light (%) that has passed through a sample with respect to the intensity of incident light as 100%, and is a sum of a diffuse light transmittance (DF), which is the percentage of an amount of light (%) diffused by the sample, and a parallel light transmittance, which is the percentage of an amount of light (%) travelling straight in the incident direction.

$$(TT) = (DF) + (\text{parallel light transmittance})$$

Meanwhile, a haze ratio (Hz) is the percentage of an amount of light (%), which diffuses out of the incident light flux while incident light passes through a sample.

$$(Hz) = (DF) / (TT) \times 100$$

<Evaluation results of physical properties of light cured thin film>

On each of light cured thin films produced in Example 1, Comparative Example 1, and Comparative Example 2, measurements of the haze and the total light transmittance were carried out. The results are shown in Table 1.

[Table 1]

| | | Example 6 | Comparative Example 3 | Comparative Example 4 |
|---|---|---|---|---|
| Light curable composition | Polymer<br>Polymer in Example 1<br>Polymer in Comparative Example 1<br>Polymer in Comparative Example 2 | <br>14<br>-<br>- | <br>-<br>7<br>- | <br>-<br>-<br>6 |
| | Multifunctional acrylate<br>DPHA | 86 | 93 | 94 |
| | Photopolymerization initiator<br>Irgacure907 | 4 | 4 | 4 |
| | Solvent<br>Tetrahydrofuran | 200 | 200 | 200 |
| Evaluation of physical properties | Haze (%) | 0.05 | 47.19 | 25.76 |
| | Total light transmittance (%) | 100.23 | 97.23 | 97.07 |

[Antibacterial test]

1. Test method

An antibacterial test was conducted according to JIS-Z-2801 using a test bacterium of Staphylococcus aureus NBRC12732 as a test bacterium on a glass substrate with a light cured thin film obtained in Example 6 as a test sample, such that the test bacterium was inoculated on a surface of the test sample, and a viable cell count immediately after the inoculation was examined. Inoculation method:

The test bacterium precultured in a nutrient agar medium is diluted with a solution of a nutrient broth medium diluted 500-fold and used as an inoculum, 0.4 mL each of which is inoculated on a sample (50×50 mm) and covered with a cover film (sterilized, 40×40 mm).

Incubation condition:

35 ± 1°C, relative humidity 95% (in a thermo-hygrostat), 24 hours

Examination of viable cell count:

The sample surface and the cover film are washed out with 10 mL of a SCDLP medium. The bacterial count per 1 mL of the medium used for washing was determined by counting colonies using a NA medium.

Control:

In a Petri dish a film is placed as an underlay, the inoculum is inoculated on the film, which is then covered with a cover film. The bacterial counts immediately after the inoculation (Lmin) and after incubation for 24 hours (Lmax) are examined.

Requirements:

[1] With respect to an untreated specimen a logarithmic value of the viable cell count immediately after the inoculation the following formula holds.

inoculation the following formula holds.

$$(Lmax-Lmin) / Lmean \leq 0.2$$

Lmax: Maximum value of logarithmic value of viable cell count

Lmin: Minimum value of logarithmic value of viable cell count

Lmean: Mean value of logarithmic values of viable cell counts for 3 specimens

[2] A mean vale of viable cell counts immediately after the inoculation with respect to an untreated specimen is within the range of $6.2\times10^3$ to $2.5\times10^4$ counts/cm$^2$.
[3] A viable cell count after 24 hours with respect to an untreated specimen is 62 counts/cm$^2$ or more.

2. Test results

Antibacterial test results with respect to a copolymer according to the present invention are shown in Table 2, and test results with respect to a blank test are shown in Table 3 respectively.

[Table 2]

| [Antibacterial test results] (Unit: Bacterial cell number/cm$^2$) | | | |
|---|---|---|---|
| Test agent | Staphylococcus aureus | | |
| | Viable cell count | Viable cell count | Antibacterial activity value |
| Copolymer in Example 1 | <0.63 | -0.2 | 4.1 |

[Table 3]

| [Blank test] (Unit: Bacterial cell number/cm$^2$) | | |
|---|---|---|
| Sample name | Staphylococcus aureus | |
| | Viable cell count | Logarithmic value |
| Control group immediately after inoculation (Lmin) | $2.5\times10^4$ | 4.4 |
| After incubation for 24 hours (Lmax) | $7.5\times10^3$ | 3.9 |

As obvious from Table 2 and Table 3 a composition according to the present invention is superior in antibacterial properties, and also superior in transparency.

Industrial Applicability

Since a copolymer according to the present invention is superior not only in regenerable antibacterial properties but also in transparency of a coated film, it is suitable for fields requiring such characteristics, for example, uses such as optical goods, a clear paint, a transparent adhesive, military goods, medical and sanitary goods, and a food packaging material.

## Claims

1. A copolymer comprising a repeating unit represented by the following formula (I):

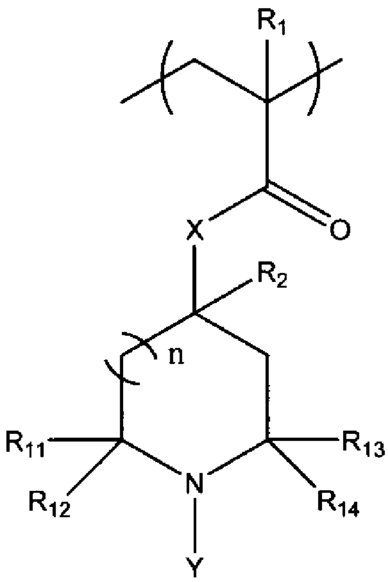

(I)

(wherein $R_1$ represents a hydrogen atom or a methyl group; $R_2$ represents a hydrogen atom or a saturated or unsaturated alkyl group having 1 to 18 carbon atoms; $R_{11}$ to $R_{14}$ each independently represent a hydrogen atom or an alkyl group, provided that at least 2 of $R_{11}$ to $R_{14}$ represent an alkyl group, and that $R_{11}$ and $R_{12}$, or $R_{13}$ and $R_{14}$ can bond together to form a ring; X represents -O- or - $NR_{20}$-; $R_{20}$ represents a hydrogen atom, or an alkyl group; Y represents a halogen atom; and n represents 0 or 1) and a repeating unit having a crosslinkable functional group.

**2.** The copolymer according to claim 1, wherein the copolymer comprises the repeating unit represented by formula (I) and the repeating unit having a crosslinkable functional group at a molar ratio of 99:1 to 1:99.

**3.** The copolymer according to claim 1 or 2, wherein the repeating unit having a crosslinkable functional group is a repeating unit represented by the following formula (II) :

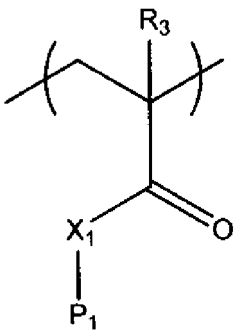

(II)

(wherein $R_3$ represents a hydrogen atom or a methyl group, $X_1$ represents an oxygen atom or a nitrogen atom optionally having a substituent, and $P_1$ represents a group comprising a crosslinkable functional group.)

**4.** The copolymer according to any one of claims 1 to 3, wherein the crosslinkable functional group is a group selected from the group consisting of an epoxy group, an oxetanyl group, a dioxanyl group, a carboxyl group, an unsaturated group having a carbon-carbon double bond, a hydroxyl group, an amino group having active hydrogen, an isocyanate group, an isothiocyanate group, a cyano group, a mercapto group, an azide group, a propargyl group, a benzocyclobutenyl group, and a crosslinkable silyl group.

**5.** The copolymer according to any one of claims 1 to 4 having a weight-average molecular weight of 1,000 to 50,000.

**6.** A curable composition comprising the copolymer according to any one of claims 1 to 5, a curable compound, and a polymerization initiator.

**7.** A coating agent comprising the curable composition according to claim 6.

**8.** A paint comprising the curable composition according to claim 6.

**9.** An adhesive comprising the curable composition according to claim 6.

**10.** A cured product obtained by curing the curable composition according to claim 6.

**11.** A method for adding an antibacterial activity to a resin, comprising mixing the copolymer according to any one of claims 1 to 5 with the resin.

## INTERNATIONAL SEARCH REPORT

International application No.
PCT/JP2014/005985

A. CLASSIFICATION OF SUBJECT MATTER
*C08F220/34*(2006.01)i, *C08F2/44*(2006.01)i, *C08F220/60*(2006.01)i, *C08F265/00*(2006.01)i, *C09D5/14*(2006.01)i, *C09D133/14*(2006.01)i, *C09D133/26*(2006.01)i, *C09J133/14*(2006.01)i, *C09J133/26*(2006.01)i

According to International Patent Classification (IPC) or to both national classification and IPC

B. FIELDS SEARCHED

Minimum documentation searched (classification system followed by classification symbols)
C08F220/34, C08F2/44, C08F220/60, C08F265/00, C09D5/14, C09D133/14, C09D133/26, C09J133/14, C09J133/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | WO 2009/158285 A2 (THE UNIVERSITY OF SOUTH DAKOTA), 30 December 2009 (30.12.2009), paragraphs [0002] to [0004], [0036], [0039] to [0040], [0058], [0068] to [0070], [0080]; claims<br>& US 2009/0324536 A1 & EP 2303936 A1<br>& CA 2728286 A & CN 102131836 A<br>& IL 209972 D | 1-2,4-11<br>3 |
| A | Yi Deng, Wei Chen, Tao Yu, Li Gong Chen, Fang Liu, and Chun Wei Xin, "Synthesis, characterization and antibacterial properties of multifunctional hindered amine light stabilizers", Chinese Chemical Letters, 2008, Vol.19, P.1071-1074 | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 December 2014 (17.12.14) | 06 January 2015 (06.01.15) |

| Name and mailing address of the ISA/ | Authorized officer |
|---|---|
| Japan Patent Office | |
| Facsimile No. | Telephone No. |

Form PCT/ISA/210 (second sheet) (July 2009)

**INTERNATIONAL SEARCH REPORT**

International application No.
PCT/JP2014/005985

C (Continuation). DOCUMENTS CONSIDERED TO BE RELEVANT

| Category* | Citation of document, with indication, where appropriate, of the relevant passages | Relevant to claim No. |
|---|---|---|
| A | Zhengbing Cao, and Yuyu Sun, "Polymeric N-Halamine Latex Emulsions for Use in Antimicrobial Paints", Applied Materials & Interfaces, 2009, Vol.1, No.2, P.494-504 | 1-11 |
| P,X | WO 2014/087644 A1 (Nippon Soda Co., Ltd.), 12 June 2014 (12.06.2014), paragraphs [0076] to [0079] (Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013250326 A
- WO 2009158285 A